# EUROPÄISCHE PATENTSCHRIFT

(11) **EP 1 396 382 B1**
(45) Veröffentlichungstag und Bekanntmachung des Hinweises auf die Patenterteilung: **19.04.2006**
(21) Anmeldenummer: 03027142.3
(22) Anmeldetag: 24.07.2001
(51) Int. Cl.: B60R 5/04

(54) **Laderaumabdeckung für Kraftwagen, insbesondere für Kombinations-Personenkraftwagen**
Load comparatment cover for vehicles, in particular for station wagons
Couvercle pour le compartiment de charge d'un véhicule, notamment pour véhicule familial

(30) Priorität: 04.08.2000 DE 10038842
(43) Veröffentlichungstag der Anmeldung: 10.03.2004
(62) Teilanmeldung aus: 01117907.4
(73) Patentinhaber: BOS GmbH & Co. KG, 73760 Ostfildern (DE)
(72) Erfinder: Butz, Peter, 20149 Hamburg (DE); Sitzler, Wolfgang, 42111 Wuppertal (DE)
(74) Vertreter: Patentanwälte Ruff, Wilhelm, Beier, Dauster & Partner

(56) Entgegenhaltungen:
- EP-A- 1 084 907
- DE-A- 19 527 068
- DE-A- 19 754 223
- DE-A- 19 847 787
- US-A- 5 224 748
- PATENT ABSTRACTS OF JAPAN Bd. 014, Nr. 186 (M-0962), 16. April 1990 (1990-04-16) & JP 02 034446 A (MITSUBISHI MOTORS CORP), 5. Februar 1990 (1990-02-05)

## Beschreibung

Die Erfindung betrifft eine Laderaumabdeckung für Kraftwagen, insbesondere für Kombinations-Personenkraftwagen.

Aus der DE-GM 75 00 822 ist eine veränderliche, demontierbare Laderaumabdeckung für Kraftfahrzeuge bekannt. Hier sind bereits Führungsglieder beschrieben, die in einer Führungsschiene geführt sind. Eine Verriegelung der Führungsglieder ist nicht vorgesehen.

Aus der DE 33 48 325 C3 ist ebenfalls eine Laderaumabdeckung für Kraftwagen bekannt. Hier ist die Abdeckplane faltbar ausgebildet, d.h. insbesondere ist die Werkstoffbahn nicht entgegen dem Drehmoment eines Federmotors von einer Wickelwelle abziehbar. Darüber hinaus zeigt diese Druckschrift kein Endbord. Ein Sperrelement ist hier der Führung zugeordnet, nicht jedoch dem Führungskörper.

Aus der US 5,224,748 A ist gemäß dem Ausführungsbeispiel der Fig. 4 bis 6 eine Laderaumabdeckung bekannt, bei der in Führungsschienen geführte Endkappen axial nach außen vorgespannt sind. Die Endkappen können in taschenförmige Aufnahmen eintauchen. Die Aufnahmen sind nach Art eines Sackloches ausgebildet und weisen einen Durchmesser auf, der im wesentlichen dem Durchmesser der Endkappen entspricht. Zugleich entspricht der Durchmesser der taschenförmigen Aufnahmen im wesentlichen der Höhe der Führungsschiene. Für den Fall, daß sich die Kappen in ihrem eingezogenen Zustand befinden, und eine Verlagerung der Werkstoffbahn in Form einer Auszugs- oder einer Einwärtsbewegung der Werkstoffbahn möglich ist, gleiten die Endkappen in den Führungsschienen. Die Endkappen, die im weitesten Sinne als Sperrelemente oder als Sperrzunge bezeichnet werden können, stellen auf diese Weise zugleich auch die Führungskörper dar. Eine Optimierung der Führungseigenschaften des Führungskörpers gesondert von einer Optimierung der Sperreigenschaften der Sperrzunge ist daher bei dieser Laderaumabdeckung nicht möglich.

Der Erfindung liegt die Aufgabe zu Grunde, eine Laderaumabdeckung für Kraftwagen zu schaffen, die die Möglichkeit einer automatischen Arretierung bei maximal ausgefahrener Werkstoffbahn bietet, die stabil sowie einfach ausgebildet ist und auf einfache Weise bedienbar ist, wobei außerdem eine sichere Führung der Laderaumabdeckung in den karosserieseitig befestigten Führungen gewährleistet ist.

Die Erfindung löst diese Aufgabe mit den Merkmalen des Anspruchs 1. Demnach wird eine Laderaumabdeckung für Kraftwagen, insbesondere für Kombinations-Personenkraftwagen geschaffen, mit einer entgegen dem Drehmoment eines Federmotors von einer Wickelwelle abziehbaren, flexiblen Werkstoffbahn, die an ihrem freien Endbereich ein Endbord od. dgl. Endelement aufweist, wobei karosserieseitig befestigte Führungen für wenigstens einen Führungskörper vorgesehen sind, wobei der Führungskörper dem Endbord zugeordnet ist, wobei dem Führungskörper eine Sperrzunge zugeordnet ist, die als separates Bauteil ausgebildet ist, die zwischen einer Sperrposition, in der sie eine Bewegung des Führungskörpers in Aufwickelrichtung sperrt, und einer Freigabeposition, in der sie eine derartige Bewegung nicht behindert, verlagerbar ist, wobei die Sperrzunge in Sperrrichtung federbelastet ist, und wobei ein Entriegelungsmittel zur Verlagerung der Sperrzunge aus der Sperrposition in die Freigabeposition vorgesehen ist.

Gemäß der Erfindung ist der Führungskörper als im wesentlichen quaderförmiger Gleitstein ausgebildet. Eine derartige Formgebung des Führungskörpers ermöglicht eine besonders sichere Führung. Insbesondere bei Vorsehen eines entsprechenden Profils für die Führung können die Quaderflächen des Führungskörpers entlang der entsprechenden Innenflächen der Führung oder Führungsschiene gleiten. Fehlfunktionen sind auf diese Weise sicher ausgeschlossen.

Bei der erfindungsgemäßen Laderaumabdeckung ist am freien Endbereich der Werkstoffbahn ein Endbord vorgesehen. Die Zuordnung des Führungskörpers zu diesem Endbord ermöglicht eine besonders stabile Konstruktion. Gleichzeitig wird hierdurch die Möglichkeit geschaffen, auch das Entriegelungsmittel dem Endbord zuzuordnen. Dies führt insgesamt zu einer einfachen und bequemen Handhabung.

Gleiches gilt für die Zuordnung der Sperrzunge zu den Führungskörpern. Diese Anordnung bietet die Möglichkeit einer besonders stabilen Konstruktion. Außerdem ist eine solche Anordnung sehr einfach aufgebaut.

Die Sperrzunge ist zwischen einer Sperrposition und einer Freigabeposition verlagerbar. Durch die ständige Federbelastung der Sperrzunge in Sperrichtung besteht die grundsätzliche Möglichkeit bei sicherer Führung die ausgefahrene Werkstoffbahn entgegen der Wirkung der Rückstellkraft des Federmotors zu arretieren. Eine solche Arretierung kann nun prinzipiell auch automatisch beim Ausfahren der Werkstoffbahn erfolgen.

Das Vorsehen eines Entriegelungsmittels bietet dabei eine denkbar einfache Lösung, um die arretierte Werkstoffbahn zu lösen und unter dem Einfluss der Rückstellkraft, die von dem Federmotor verursacht wird, zumindest teilweise wieder einzufahren. Auch dieses Einfahren kann nun automatisch erfolgen.

Bei dem Endelement kann es sich z.B. auch um eine Endstange oder Abschlußstange handeln, die im wesentlichen quer zu der Aufwickelrichtung angeordnet ist. In jedem Fall ist das Endelement steifer ausgebildet als die Werkstoffbahn.

Bei der erfindungsgemäßen Laderaumabdeckung ist die Sperrzunge als ein von dem Führungskörper separates Bauteil ausgebildet. Dies ermöglicht eine Trennung der Funktionen von Führungskörper und Sperrzunge. Die Sperrzunge kann aus einem besonderen geeigneten Material bestehen, welches beispielsweise crashsicher auszulegende Sperreigenschaften der Sperrzunge optimiert. Die Führungskörper kann andererseits hinsichtlich seiner Führungseigenschaften optimiert sein.

Gemäß einer vorteilhaften Ausgestaltung der Erfindung ist die Sperrzunge verschwenkbar Dies ermöglicht das Vorsehen von besonderen Aufgleitflächen an der Sperrzunge. Es ist grundsätzlich möglich, dass die Sperrzunge beim Ausfahren der Werkstoffbahn in ggf. vorgesehene Ausnehmungen in der Führung hineinfallen kann. Wird die Werkstoffbahn nach Erreichen einer ersten Rastposition nicht weiter ausgezogen, so kann die Sperrzunge mittels einer Haltefläche dafür sorgen, dass die teilweise ausgezogene Werkstoffbahn entgegen der Wirkung der Rückstellkraft des Federmotors arretiert wird.

Prinzipiell ist es auch möglich, mehrere Ausnehmungen in der Führung vorzusehen. Eine Ausnehmung oder ggf. ein Paar von Ausnehmungen entspricht dann einer Rastposition für den oder die Führungskörper. Beispielsweise kann ein erstes Paar von Ausnehmungen in einem Bereich in der Führung angeordnet werden, der einer Rastposition bei halb ausgefahrener Werkstoffbahn entspricht. Befindet sich die Sperrzunge in einer solchen Rastausnehmung, kann der Benutzer prinzipiell ohne besonders großen Kraftaufwand auf Grund des Vorhandenseins der Gleitfläche die Werkstoffbahn weiter ausziehen und mit der Sperrzunge eine andere Rastposition erreichen. In dieser neuen Rastposition, insbesondere in einer Rastposition, die einer weiter ausgefahrenen Werkstoffbahn entspricht, kann nun die Sperrzunge die Werkstoffbahn wieder sicher arretieren.

Gemäß einer weiteren Ausgestaltung der Erfindung ist an dem Endbord ein Griffteil angeordnet, welches als Entriegelungsmittel ausgebildet ist. Hier besteht nun die Möglichkeit, das Griffteil einerseits zum Ausziehen der Werkstoffbahn aus einem Rollogehäuse zu benutzen und hierfür einen denkbar einfachen Griff bereitzustellen. Andererseits kann das gleiche, ohnehin bereits vorhandene Element dafür genutzt werden, um eine Entriegelung, beispielsweise durch Verschwenkung des Griffteils vorzunehmen, um die Werkstoffbahn wieder einzufahren.

Nunmehr genügt prinzipiell eine einmalige Bewegung des Griffteils bei maximal ausgefahrener Werkstoffbahn, um die Sperrzunge zu entriegeln und die Werkstoffbahn automatisch vollständig einfahren zu lassen.

Gemäß einer besonders einfachen und stabilen Ausführung der Erfindung ist die Sperrzunge mit dem Griffteil bewegungsgekoppelt.

Dadurch, dass die Sperrzunge als separates Bauteil ausgebildet ist und an dem Führungskörper angeordnet ist, besteht grundsätzlich die Möglichkeit, für die Sperrzunge ein besonderes, geeignetes Material vorzusehen. Andererseits hat die unmittelbare Zuordnung von Sperrzunge zum Führungskörper konstruktive Vorteile, weil beispielsweise der Führungskörper unmittelbar auch an der Welle befestigt sein kann.

Gemäß einer weiteren besonders vorteilhaften Ausführung der Erfindung ist der Führungskörper im wesentlichen hohl ausgebildet und die Sperrzunge innerhalb des Führungskörpers angeordnet. Auf diese Weise wird für die Sperrzunge innerhalb des Führungskörpers Bewegungsraum zur Verfügung gestellt. Dies ermöglicht ebenfalls eine einfache und sichere Konstruktion.

Gemäß einer besonders vorteilhaften Ausgestaltung der Erfindung ist die Führung als Profil ausgebildet, insbesondere als im wesentlichen C-förmiges Profil. Auf diese Weise können Rastpositionen für den Führungskörper auf einfache Weise durch Anbringung von Ausnehmungen für die Sperrzunge vorgesehen werden. Die Ausnehmungen können dabei beispielsweise in der Profilwand oder in den Profilböden angeordnet sein.

Weitere Vorteile der Erfindung ergeben sich aus den nicht zitierten Unteransprüchen sowie an Hand der nachfolgenden Beschreibung eines in den Zeichnungen dargestellten Ausführungsbeispiels. Darin zeigen:
Fig. 1 schematisch eine erfindungsgemäße Laderaumabdeckung in Draufsicht mit maximal ausgezogener Werkstoffbahn,
Fig. 2 schematisch in teilgeschnittener Ansicht einen Führungskörper mit Sperrzunge, der sich in einer Führung befindet,
Fig. 3 schematisch in teilgeschnittener Ansicht einen Schnitt durch Führung und Führungskörper gemäß Schnittlinie III-III in Fig. 2, und
Fig. 4 schematisch in teilgeschnittener Ansicht ein Griffteil zur Betätigung der Werkstoffbahn.

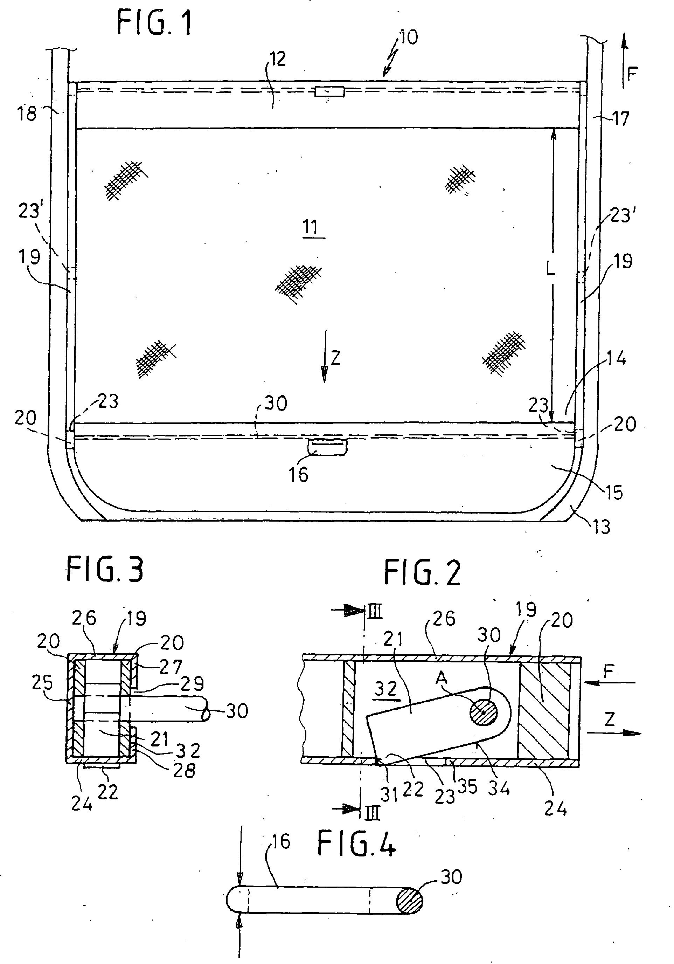

Die erfindungsgemäße Laderaumabdeckung 10 ist in dem Bereich eines Laderaumes eines in den Figuren nicht dargestellten Kraftfahrzeugs angeordnet. Fig. 1 zeigt die Laderaumabdeckung 10 in einer Perspektive, die sich einem Betrachter bietet, der von der Decke des hinteren Laderaums eines Kraftfahrzeuges nach unten schaut.

Die Laderaumabdeckung 10 umfasst eine flexible Werkstoffbahn 11, die aus einem flexiblen, textilen Werkstoff bestehen kann, aber auch beispielsweise eine Netzstruktur oder dgl. aufweist. Die Werkstoffbahn 11 ist auf einer nicht dargestellten Wickelwelle aufrollbar, die sich innerhalb des Rollogehäuses 12 befindet.

Gemäß Fig. 1 ist die Werkstoffbahn 11 in ihrer maximalen Ausziehposition dargestellt. Die Werkstoffbahn 11 ist aus dem Rollogehäuse 12 in Ausziehrichtung Z entgegen der Fahrtrichtung F des Fahrzeuges weitest möglich zum Fahrzeugende 13 hin, herausgezogen. Am freien Ende 14 der Werkstoffbahn 11, also an dem Ende, welches nicht an der Wickelwelle befestigt ist, ist gemäß Fig. 1 ein mit der Werkstoffbahn 11 fest verbundenes Endbord 15 angeordnet. Das Endbord 15 besteht aus einem verglichen mit der Werkstoffbahn 11 härteren, steiferen Material.

Etwa mittig ist gemäß Ausführungsbeispiel nach Fig. 1 an dem Endbord 15 ein Griffteil 16 angeordnet. Dieses ist beispielsweise aus der Ebene des Endbordes 15 heraus verschwenkbar und ermöglicht einem Benutzer einen besonders einfachen Griff des Endbordes 15, um die Werkstoffbahn 11 auszuziehen oder einzufahren.

Ggf. kann diesem Griffteil 16 auch ein nicht dargestelltes Abdeckelement zugeordnet sein, wie es beispielsweise in der DE 197 07 676 C1 der Anmelderin beschrieben ist.

Das Rollogehäuse 12 bzw. die nicht dargestellte Wickelwelle für die Werkstoffbahn 11 sind fahrzeugseitig befestigt. Insbesondere können diese beiden Elemente an Seitenwänden 17,18 des Fahrzeugs befestigt sein.

Auf der Innenraumseite der jeweiligen Seitenwand 17,18 sind Führungen 19 angeordnet, die sich unmittelbar an das Rollogehäuse 12 anschließen. Die Führungen 19 sind als Profilschienen ausgebildet, innerhalb derer als Führungskörper 20 ein Gleitstein verschiebbar angeordnet ist.

Fig. 2 zeigt schematisch einen Abschnitt der Führung 19 sowie den darin befindlichen Führungskörper 20. Der Führungskörper 20 ist im wesentlichen quaderförmig ausgebildet und innen hohl. In dem Innenraum des Führungskörper 20 ist eine Sperrzunge 21 angeordnet. Diese ist um eine Achse A schwenkbar.

Fig. 2 zeigt die Sperrzunge 21 in ihrer Sperrposition. In dieser Position ragt ein freier Endbereich 22 der Sperrzunge 21 durch eine Ausnehmung 23 in der Wandung der Führung 19.

Wie aus Fig. 2 und Fig. 3 deutlich wird, ist die Ausnehmung 23 bei dem dargestellten Ausführungsbeispiel in der unteren Profilwand 24 angeordnet. Grundsätzlich ist es aber auch möglich, die Ausnehmung 23 in einer anderen Wand der Führung 19 anzuordnen.

Fig. 3 zeigt im Schnitt deutlich, dass die Führung 19 ein im wesentlichen C-förmiges Profil ist. Dieses besteht aus einem Profilboden 25, sowie der unteren Profilwand 24, einer oberen Profilwand 26 und zwei Profilflanschen 27,28.

Zwischen den beiden Profilflanschen 27 und 28 befindet sich ein Führungsschlitz 29. Der Führungskörper 20 ist somit unverlierbar in dem Innenraum des C-förmigen Profils gehalten.

Der Führungsschlitz 29 wird von einer Welle 30 durchgriffen. Diese Welle 30 verbindet einerseits den Führungskörper 20 mit dem Griffteil 16, welches bei dem dargestellten Ausführungsbeispiel das Betätigungsteil darstellt. Andererseits ist die Welle 30 selbst drehbar gelagert, so dass eine Schwenkbewegung des Griffteils 16, welches fest mit der Welle 30 verbunden ist, unmittelbar in einer Schwenkbewegung der Sperrzunge 21 resultiert. Dazu ist die Welle 30 gemäß Fig. 2 und 3 direkt mit der Sperrzunge 21 verbunden. Die Welle 30 ist somit auch drehbar in einer Seitenwand 32 des Führungskörpers 20 gelagert.

Fig. 4 zeigt in teilgeschnittener Ansicht deutlich, dass das Griffteil 16 unmittelbar mit der Welle 30 verbunden ist.

Die gesamte Anordnung ist zur Fahrzeuglängsmittelachse symmetrisch getroffen. Die Welle 30 verbindet somit zwei Führungskörper 20 miteinander. Entsprechend sind Ausnehmungen 23 bzw. 23' jeweils paarweise vorgesehen.

Im folgenden soll kurz die Funktionsweise der erfindungsgemäßen Laderaumabdeckung 10 erklärt werden. Ausgehend von einer in den Figuren nicht dargestellten Situation, bei der die Werkstoffbahn 11 maximal in das Rollogehäuse 12 eingefahren ist, befindet sich das Endbord 15 relativ nahe am Rollogehäuse 12. Falls nun ein Benutzer die Werkstoffbahn 11 ausziehen möchte, ergreift er das Griffteil 16 des Endbords 15 und übt eine Zugkraft entgegen der Fahrtrichtung des Kraftfahrzeugs auf das Endbord 15 aus.

Auf Grund dieser Zugkraft in Ausziehrichtung Z gleiten die Führungskörper 20 in den beiden Führungen 19. Das Endbord 15 entfernt sich nun mit zunehmender Ausziehlänge der Werkstoffbahn 11 von dem Rollgehäuse 12.

Sobald das Endbord 15 seine in Fig. 1 dargestellte Endposition erreicht hat, bei der die Werkstoffbahn 11 ihre maximale Ausziehlänge L zeigt, gerät der Führungskörper 20 in den Bereich der Ausnehmung 23. Da die Sperrzunge 21 in Sperrichtung ständig federbelastet ist, fällt die Sperrzunge 21 mit ihrem freien Endbereich 22 in die Ausnehmung 23 hinein (Fig. 2). Obwohl in dieser Position eine Rückstellkraft auf das Endbord 15 wirkt, welches von dem nicht dargestellten Federmotor der Wickelwelle ausgeübt wird, ist das Endbord 15 und damit auch die Werkstoffbahn 11 sicher arretiert. Der freie Endbereich 22 der Sperrzunge 21 stößt in dieser Position gemäß Fig. 2 gegen einen Stirnrandbereich 31 der Ausnehmung 23, der dem Rollogehäuse 12 am nächsten liegt.

Die Arretierung ist in dieser Position dauerhaft und sicher.

Möchte der Benutzer nun die Verriegelungslage lösen, beispielsweise um das Rollo wieder einzufahren, so genügt prinzipiell eine einmalige kurze Betätigung des Griffteils 16. Durch Verschwenkung des Griffteils 16 und damit einhergehender bewegungsgekoppelter Verschwenkung der Welle 30 wird auch die Sperrzunge 21 um die Achse A gemäß Fig. 2 in ihre nicht dargestellte Freigabeposition verschwenkt. Die Rückstellkraft auf das Endbord 15 und die Werkstoffbahn 11, die von dem Federmotor bereitgestellt wird, bewirkt nun ein Einfahren der Werkstoffbahn 11 in Fahrtrichtung F relativ zu dem Rollo 12, ohne dass der Benutzer zusätzliche Maßnahmen ergreifen muss. Grundsätzlich kann die Federkraft derart abgestimmt werden, dass ein Einfahren weitgehend automatisch erfolgt. Der Benutzer müsste dazu dann lediglich den Handgriff 16 einmalig kurz betätigen und kann sodann das Griffteil 16 loslassen, während die Werkstoffbahn 11 auf Grund der Rückstellkraft des Federmotors selbständig einfährt.

Bei dem dargestellten Ausführungsbeispiel gemäß der Fig. 1 und 4 ist zu berücksichtigen, dass eine Verschwenkung des Griffteils 16 selbstverständlich in dem gleichen Drehsinne erfolgen kann, wie die Verschwenkung der Sperrzunge 21. Grundsätzlich ist aber auch möglich, eine derartige Schwenkbewegung des Griffteils 16 über beispielsweise ein Getriebe in eine andere Schwenkbewegung umzuwandeln, beispielsweise eine Schwenkbewegung im entgegengesetztem Drehsinne.

Bei einem nicht dargestellten Ausführungsbeispiel befindet sich im Bereich des Griffteils 16 ein Abdeckelement für das Griffteil 16. Einzelheiten hierzu können der DE 197 07 676 C1 entnommen werden.

Dabei kann vorgesehen sein, dass im zusammengebauten Zustand das Abdeckelement im Fahrzeug unterhalb des Griffteils 16 angeordnet ist. Bei Eingriff des Benutzers durch eine Grifföffnung im Endbord 15 wird automatisch das Abdeckelement zum Fahrzeugboden hin verschwenkt. Dies hat unmittelbar eine Drehung der Welle 30 gemäß Fig. 2 im Uhrzeigersinn zur Folge, wodurch die Sperrzunge 21 von ihrer Sperrposition in ihre Freigabeposition verschwenkt wird.

Gemäß Fig. 1 sind die Ausnehmungen 23 ausschließlich im Endlagebereich des Endbords 15 vorgesehen. Selbstverständlich können aber auch zusätzliche Ausnehmungen in der Führung 19 vorgesehen sein. So bietet es sich beispielsweise an, Ausnehmungen 23', die in Fig. 1 lediglich angedeutet sind, in einem Bereich der Führung vorzusehen, in dem die Werkstoffbahn 11 etwa ihre halbe maximale Ausziehlänge L erreicht hat.

Natürlich kann die Zahl der möglichen Rastpositionen entsprechend einer Zahl von Ausnehmungen auch noch größer sein.

Wesentlich ist bei Verwendung einer Sperrzunge 21 gemäß Fig. 2, dass diese über eine Gleitfläche 34 verfügt. Für den Fall, dass eine Werkstoffbahn 11 aus ihrer maximal eingefahrenen Position in eine Position gemäß Fig. 1 ausgezogen werden soll, würden die Führungskörper 20 zunächst in den Bereich der Ausnehmung 23' geraten. Der Benutzer möchte die Werkstoffbahn 11 aber ohne größere Probleme und in einem Zug in ihre Endposition gemäß Fig. 1 verfahren. Da die Sperrzunge 21 über eine relativ lange Angleitfläche 34 verfügt, kann die Sperrzunge 21 über den Bereich der Ausnehmungen 23' problemlos überfahren werden. Die Sperrzunge 21 würde zunächst mit ihrem freien Endbereich 22 in die Ausnehmung 23' einfahren. Beim weiteren Ausziehen der Werkstoffbahn 11 in Ausziehrichtung Z gleitet die Gleitfläche 34 der Sperrzunge 21 über einen Bereich 35 der nicht dargestellten Ausnehmung 23' auf, ohne dass der Benutzer dieses merklich registriert. Dieser Bereich 35 wurde in Fig. 2 lediglich beispielhaft mit dem Bezugszeichen 35 bezeichnet. Dies soll veranschaulichen, dass es sich bei dem oben erwähnten Bereich 35 der Ausnehmung 23' um den Stirnrandbereich der Ausnehmung 23' handelt, der von dem Rollogehäuse 12 am weitesten entfernt ist.

Lediglich beim Zurückfahren der Werkstoffbahn 11 aus ihrer maximalen Ausziehlage in ihre maximal eingezogene Lage gleitet die Sperrzunge 21 nicht problemlos über den Stirnrandbereich 31 der nicht dargestellten Ausnehmung 23'. Hier kann ein Zeitverzögerungsmechanismus Abhilfe schaffen, der etwa wie folgt funktioniert: Bei maximal ausgezogener Werkstoffbahn 11 wird das Betätigungsteil, insbesondere das Griffteil 16, einmalig kurz bewegt. Dies hat zur Folge, dass die Sperrzunge 21 aus ihrer Sperrposition in ihre Freigabeposition verschwenkt wird. Auf Grund eines besonderen Verzögerungsmechanismus verbleibt die Sperrzunge 21 nun während eines bestimmten Zeitraumes in ihrer Freigabeposition, bis die Werkstoffbahn 11 vollständig d.h. maximal eingezogen ist. Die Sperrzunge 21 kann somit problemlos in Fahrtrichtung F, d.h. hin zum Rollogehäuse 12, auch über die Ausnehmung 23' hinübergleiten.

Dargestellt und beschrieben wurde als Betätigungsteil für die Sperrzunge 21 ein Griffteil 16 bzw. ein Abdeckelement für das Griffteil 16. Grundsätzlich ist es aber auch vorstellbar, dass das Betätigungsteil beispielsweise über einen Bowdenzug oder ein mechanisches Gestänge funktioniert. Außerdem ist es grundsätzlich möglich, die Entriegelungsmittel nicht nur dem Endbord zuzuordnen, wie hier geschehen sondern es ist auch vorstellbar, die Entriegelungsmittel der Führung zuzuordnen.

Die Sperrzunge 21 ist ständig in Sperrichtung federbelastet. Die hierfür erforderliche Feder ist in den Zeichnungen nicht dargestellt, jedoch beispielsweise entweder im Bereich des Führungskörpers 20 oder aber auch im Bereich des Griffteils 16 anordenbar.

Eine Anordnung gemäß Fig. 1 hat den Vorteil, dass die Werkstoffbahn 11 nicht jedes Mal vollständig eingefahren werden muß, nachdem sie aus ihrer maximalen Ausfahrposition gelöst wurde. Beispielsweise kann ein Benutzer eine Werkstoffbahn 11 aus einer maximalen Ausfahrposition gemäß Fig. 1 ein Stück einfahren, bis der Führungskörper 20 den Bereich der Ausnehmungen 23' erreicht hat. In dieser Stellung kann ebenfalls eine Arretierung stattfinden. Hat der Benutzer nun beispielsweise Gegenstände aus dem Laderaum entnommen oder in diesen eingebracht, und wünscht er nun die Werkstoffbahn 11 wieder in die maximale Endlageposition gemäß Fig. 1 zu überführen, so muss er nicht tief in den Laderaum des Fahrzeuges hineingreifen, sondern kann bequem das Griffteil 16 des Endbords 15 ergreifen, welches sich in einer Zwischenposition im Bereich der Ausnehmungen 23' befindet.

Auf diese Weise ist nun möglich mit einem einzigen Betätigungsteil auszukommen. Dies vereinfacht die im Stand der Technik bekannte Rückführung der Werkstoffbahn 11 in ihre eingezogene Lage. Dort waren grundsätzlich aufwendige Handgriffe mit zwei Händen notwendig.

## Patentansprüche

1. Laderaumabdeckung (10) für Kraftwagen, insbesondere für Kombinations-Personenkraftwagen, mit einer entgegen dem Drehmoment eines Federmotors von einer Wickelwelle abziehbaren, flexiblen Werkstoffbahn (11), die an ihrem freien Endbereich ein Endbord (15) od. dgl. Endelement aufweist, wobei karosserieseitig befestigte Führungen (19) für wenigstens einen Führungskörper (20) vorgesehen sind, wobei der Führungskörper (20) dem Endbord (15) zugeordnet ist, wobei dem Führungskörper (20) eine Sperrzunge (21) zugeordnet ist, die als separates Bauteil ausgebildet ist, die zwischen einer Sperrposition, in der sie eine Bewegung des Führungskörpers (20) in Aufwickelrichtung (F) sperrt, und einer Freigabeposition, in der sie eine derartige Bewegung nicht behindert, verlagerbar ist, wobei die Sperrzunge (21) in Sperrrichtung federbelastet ist, und wobei ein Entriegelungsmittel (16) zur Verlagerung der Sperrzunge (21) aus der Sperrposition in die Freigabeposition vorgesehen ist, **dadurch gekennzeichnet, dass** der Führungskörper (20) als im wesentlichen quaderförmiger Gleitstein ausgebildet ist.

2. Laderaumabdeckung nach Anspruch 1, **dadurch gekennzeichnet, dass** die Sperrzunge (21) verschwenkbar ist.

3. Laderaumabdeckung nach Anspruch 1 oder 2, **dadurch gekennzeichnet, dass** an dem Endbord (15) ein Griffteil (16) angeordnet ist, welches als Entriegelungsmittel ausgebildet ist.

4. Laderaumabdeckung nach Anspruch 3, **dadurch gekennzeichnet, dass** die Sperrzunge (21) mit dem Griffteil (16) über eine Welle (30) bewegungsgekuppelt ist.

5. Laderaumabdeckung nach Anspruch 4, **dadurch gekennzeichnet, dass** die Wellenachse zugleich die Achse (A) der Sperrzunge (21) ist.

6. Laderaumabdeckung nach einem der vorangegangenen Ansprüche, **dadurch gekennzeichnet, dass** die Sperrzunge (21) aus dem Führungskörper (20) materialeinheitlich herausgearbeitet ist.

7. Laderaumabdeckung nach einem der Ansprüche 1 bis 5, **dadurch gekennzeichnet, dass** die Sperrzunge (21) an dem Führungskörper (20) angeordnet ist.

8. Laderaumabdeckung nach Anspruch 7, **dadurch gekennzeichnet, dass** der Führungskörper (20) im wesentlichen hohl ausgebildet ist und die Sperrzunge (21) innerhalb des Führungskörpers angeordnet (20) ist.

9. Laderaumabdeckung nach einem der vorangegangenen Ansprüche, **dadurch gekennzeichnet, dass** die Führung (19) als Profil, insbesondere als im wesentlichen C-förmiges Profil ausgebildet ist.

10. Laderaumabdeckung nach einem der vorangegangenen Ansprüche, **dadurch gekennzeichnet, dass** die Sperrzunge (21) in ihrer Sperrposition in Ausnehmungen (23,23') der Führung (19) eingreift.

11. Laderaumabdeckung nach einem der vorangegangenen Ansprüche, **dadurch gekennzeichnet, dass** Ausnehmungen (23) in der Führung (19) vorgesehen sind, die einer Ausziehposition der Werkstoffbahn (11) bei maximaler Ausziehlänge (L) entsprechen.

12. Laderaumabdeckung nach Anspruch 11, **dadurch gekennzeichnet, dass** zusätzliche Ausnehmungen (23') vorgesehen sind, die einer Ausziehposition der Werkstoffbahn (11) bei einem Teil der maximalen Ausziehlänge (L) entsprechen.

13. Laderaumabdeckung nach einem der vorangegangenen Ansprüche, **dadurch gekennzeichnet, dass** die Anordnung im wesentlichen symmetrisch bezüglich ihrer in Ausziehrichtung (Z) verlaufenden Längsmittelachse ausgebildet ist.

## Claims

1. Load compartment cover (10) for motor vehicles, in particular for estate cars, comprising a flexible material web (11), which is withdrawable from a winding shaft counter to the torque of a spring motor and which at its free end region has an end brim (15) or similar end element, wherein guides (19) fastened to the vehicle body are provided for at least one guide body (20), wherein the guide body (20) is associated with the end brim (15), wherein there is associated with the guide body (20) a blocking tongue (21) designed as a separate component, which is displaceable between a blocking position, in which it blocks a movement of the guide body (20) in wind-up direction (F), and a release position, in which it does not impede such a movement, wherein the blocking tongue (21) is spring-loaded in blocking direction, and wherein an unlocking means (16) is provided for displacing the blocking tongue (21) from the blocking position into the release position, **characterized in that** the guide body (20) is designed as a slide block substantially in the shape of a rectangular solid.

2. Load compartment cover according to claim 1, **characterized in that** the blocking tongue (21) is pivotable.

3. Load compartment cover according to claim 1 or 2, **characterized in that** disposed on the end brim (15) is a handle part (16), which is designed as an unlocking means.

4. Load compartment cover according to claim 3, **characterized in that** the blocking tongue (21) is motionally coupled by a shaft (30) to the handle part (16).

5. Load compartment cover according to claim 4, **characterized in that** the shaft axis is simultaneously the axis (A) of the blocking tongue (21).

6. Load compartment cover according to one of the preceding claims, **characterized in that** the blocking tongue (21) is worked uniformly in terms of material out of the guide body (20).

7. Load compartment cover according to one of claims 1 to 5, **characterized in that** the blocking tongue (21) is disposed on the guide body (20).

8. Load compartment cover according to claim 7, **characterized in that** the guide body (20) is of a substantially hollow design and the blocking tongue (21) is disposed (20) inside the guide body.

9. Load compartment cover according to one of the preceding claims, **characterized in that** the guide (19) is designed as a profile, in particular as a substantially C-shaped profile.

10. Load compartment cover according to one of the preceding claims, **characterized in that** the blocking tongue (21) in its blocking position engages into recesses (23, 23') of the guide (19).

11. Load compartment cover according to one of the preceding claims, **characterized in that** in the guide (19) recesses (23) are provided, which correspond to an extension position of the material web (11) given maximum extension length (L).

12. Load compartment cover according to claim 11, **characterized in that** additional recesses (23') are provided, which correspond to an extension position of the material web (11) given a fraction of the maximum extension length (L).

13. Load compartment cover according to one of the preceding claims, **characterized in that** the arrangement is designed substantially symmetrically relative to its longitudinal centre line extending in extension direction (Z).

## Revendications

1. Couvercle pour compartiment de charge (10) pour des véhicules automobiles, en particulier pour des voitures particulières de type familial, avec une bande de matériau (11) flexible pouvant être extraite d'un arbre d'enroulement, à l'encontre du couple d'un moteur à ressorts, la bande de matériaux présentant, à sa zone d'extrémité libre, un bord d'extrémité (15) ou un élément d'extrémité analogue, des guidages (19) fixés côté carrosserie étant prévus pour au moins un corps de guidage (20), sachant que le corps de guidage (20) est associé au bord d'extrémité (15), sachant que, au corps de guidage (20), est associée une languette de blocage (21), réalisée sous la forme de composants séparés et étant déplaçable, entre une position de blocage, à laquelle elle bloque un déplacement du corps de guidage (20) dans le sens de l'enroulement (F), et une position de libération, à laquelle elle n'empêche pas un tel déplacement, la languette de blocage (21), placée à la position de blocage, étant sollicitée par un ressort et un moyen de déverrouillage (16) étant prévu, pour faire passer la languette de blocage (21) de la position de blocage à la position de libération, **caractérisé en ce que** le corps de guidage (20) est réalisé sous la forme de patin de glissement sensiblement parallélépipédique.

2. Couvercle pour le compartiment de charge selon la revendication 1, **caractérisé en ce que** la languette de blocage (21) est pivotante.

3. Couvercle pour le compartiment de charge selon la revendication 1 ou 2, **caractérisé en ce que**, sur le bord d'extrémité (15), est disposé une partie de saisie (16), réalisée sous la forme de moyens de déverrouillage.

4. Couvercle pour le compartiment de charge selon la revendication 3, **caractérisé en ce que** la languette de blocage (21) est couplée cinématiquement à la pièce de partie de saisie (16), par un arbre (30).

5. Couvercle pour le compartiment de charge selon la revendication 4, **caractérisé en ce que** l'axe d'arbre est simultanément l'axe (A) de la languette de blocage (21).

6. Couvercle pour le compartiment de charge selon l'une des revendications précédentes, **caractérisé en ce que** la languette de blocage (21) est usinée, unitairement quant au matériau, à partir du corps de guidage (20).

7. Couvercle pour le compartiment de charge selon l'une des revendications 1 à 5, **caractérisé en ce que** la languette de blocage (21) est disposée sur le corps de guidage (20).

8. Couvercle pour le compartiment de charge selon la revendication 7, **caractérisé en ce que** le corps de guidage (20) est sensiblement creux, et la languette de blocage (21) est disposée à l'intérieur du corps de guidage (20).

9. Couvercle pour le compartiment de charge selon l'une des revendications précédentes, **caractérisé en ce que** le guidage (19) est réalisé sous la forme de profilé, en particulier de profilé sensiblement en forme de C.

10. Couvercle pour le compartiment de charge selon l'une des revendications précédentes, **caractérisé en ce que** la languette de blocage (21), à sa position de blocage, s'engage dans des évidements (23,23') du guidage (19).

11. Couvercle pour le compartiment de charge selon l'une des revendications précédentes, **caractérisé en ce que** des évidements (23) sont prévus dans le guidage (19) et correspondent à une position sortie de la bande de matériaux (11), pour une longueur d'extraction (L) maximale.

12. Couvercle pour le compartiment de charge selon la revendication 11, **caractérisé en ce que** sont prévus des évidements (23') supplémentaires, qui correspondent à une position sortie de la bande de matériau (11), pour une partie de la longueur d'extraction maximale (L).

13. Couvercle pour le compartiment de charge selon l'une des revendications précédentes, **caractérisé en ce que** l'agencement est sensiblement symétrique, par rapport à son axe médian longitudinal, s'étendant dans la direction d'extraction (Z).
